# EUROPEAN PATENT APPLICATION

(11) **EP 4 718 907 A1**
(43) Date of publication of application: **01.04.2026**
(21) Application number: 23937889.6
(22) Date of filing: 22.05.2023
(51) Int. Cl.: H04W 36/00

(54) **BEAM MEASUREMENT RESULT REPORTING METHOD AND APPARATUS, AND DEVICE AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Gunzelmann, Rainer
(86) International application number: PCT/CN2023/095619
(87) International publication number: WO 2024/239212

(57) **Abstract**

The present disclosure relates to a beam measurement result reporting method and apparatus, and a device and a storage medium. The method comprises: performing beam measurement on N first cells, so as to obtain beam measurement results corresponding to the first cells, wherein N is a positive integer greater than 1, and the N first cells comprise at least one candidate cell; and sending first information, wherein the first information comprises a beam measurement result corresponding to at least one of the N first cells. By means of performing beam measurement on at least one candidate cell, and reporting to a network device some or all beam measurement results obtained by means of performing measurement, a network device of a source cell is then supported to determine, on the basis of sufficient measurement results, whether to cause a terminal to perform cell handover, thereby improving the accuracy and reliability of cell handover.

## Description

### FIELD

The present disclosure relates to the field of communication technologies, and in particular relates to a method and an apparatus for reporting a beam measurement result, a device, and a storage medium.

### BACKGROUND

In order to reduce a delay of a conventional handover, a layer 1 (L1)/L2 based inter-cell mobility management is disclosed. A network device maintains multiple candidate cells for a terminal. As the terminal moves, the network device determines whether it is needed to perform the handover according to a beam measurement result reported by the terminal. In a case where the cell handover is needed, one cell is selected from the multiple candidate cells as a target cell, and the network device triggers the terminal to hand over to the target cell through a cell handover signaling.

### SUMMARY

In order to overcome the problems existing in the related art, the present disclosure provides a method and an apparatus for reporting a beam measurement result, a device, and a storage medium.

According to a first aspect of embodiments of the present disclosure, there is provided a method for reporting a beam measurement result. The method is performed by a terminal, and includes: performing beam measurement on N first cells to obtain beam measurement results corresponding to the N first cells, in which N is a positive integer greater than 1, and the N first cells include at least one candidate cell; and sending first information, in which the first information includes a beam measurement result corresponding to at least one of the N first cells.

According to a second aspect of embodiments of the present disclosure, there is provided a method for reporting a beam measurement result. The method is performed by a network device, and includes: receiving first information, in which the first information includes a beam measurement result corresponding to at least one of N first cells, N is a positive integer greater than 1, and the N first cells include at least one candidate cell.

According to a third aspect of embodiments of the present disclosure, there is provided an apparatus for reporting a beam measurement result, including: a processing module, configured to perform beam measurement on N first cells to obtain beam measurement results corresponding to the N first cells, in which N is a positive integer greater than 1, and the N first cells includes at least one candidate cell; and a sending module, configured to send first information, in which the first information includes a beam measurement result corresponding to at least one of the N first cells.

According to a fourth aspect of embodiments of the present disclosure, there is provided an apparatus for reporting a beam measurement result, including: a receiving module, configured to receive first information, in which the first information includes a beam measurement result corresponding to at least one of N first cells, N is a positive integer greater than 1, and the N first cells include at least one candidate cell.

According to a fifth aspect of embodiments of the present disclosure, there is provided a communication device, including: a processor; and a memory for storing processorexecutable instructions; in which the processor is configured to perform the first aspect and any one of the methods in the first aspect.

According to a sixth aspect of embodiments of the present disclosure, there is provided a communication device, including: a processor; and a memory for storing processorexecutable instructions; in which the processor is configured to perform the second aspect and any one of the methods in the second aspect.

According to a seventh aspect of embodiments of the present disclosure, there is provided a non-transitory computer-readable storage medium having stored instructions that, when executed by a processor of a terminal, enable the terminal to perform the first aspect and any one of the methods in the first aspect.

According to an eighth aspect of embodiments of the present disclosure, there is provided a non-transitory computer-readable storage medium having stored instructions that, when executed by a processor of a network device, enable the network device to perform the second aspect and any one of the methods in the second aspect.

The technical solution provided in the embodiments of the present disclosure can include advantageous effects that: the beam measurement is performed on the at least one candidate cell, and some or all of the beam measurement results measured are reported to the network device; and a network device of a source cell is supported to determine whether the terminal performs a cell handover according to sufficient measurement results, thereby improving the accuracy and reliability of the cell handover.

It is to be understood that both the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating a wireless communication system according to an illustrative embodiment.
FIG. 2 is a schematic diagram illustrating a terminal mobile scenario according to an illustrative embodiment.
FIG. 3 is a schematic diagram illustrating interaction of a cell handover signaling according to an illustrative embodiment.
FIG. 4 is a flow chart illustrating a method for reporting a beam measurement result according to an illustrative embodiment.
FIG. 5 is a schematic diagram illustrating a structure of a cell pre-configuration parameter according to an illustrative embodiment.
FIG. 6 is a flow chart illustrating another method for reporting a beam measurement result according to an illustrative embodiment.
FIG. 7 is a flow chart illustrating yet another method for reporting a beam measurement result according to an illustrative embodiment.
FIG. 8 is a flow chart illustrating yet another method for reporting a beam measurement result according to an illustrative embodiment.
FIG. 9 is a flow chart illustrating yet another method for reporting a beam measurement result according to an illustrative embodiment.
FIG. 10 is a flow chart illustrating yet another method for reporting a beam measurement result according to an illustrative embodiment.
FIG. 11 is a flow chart illustrating yet another method for reporting a beam measurement result according to an illustrative embodiment.

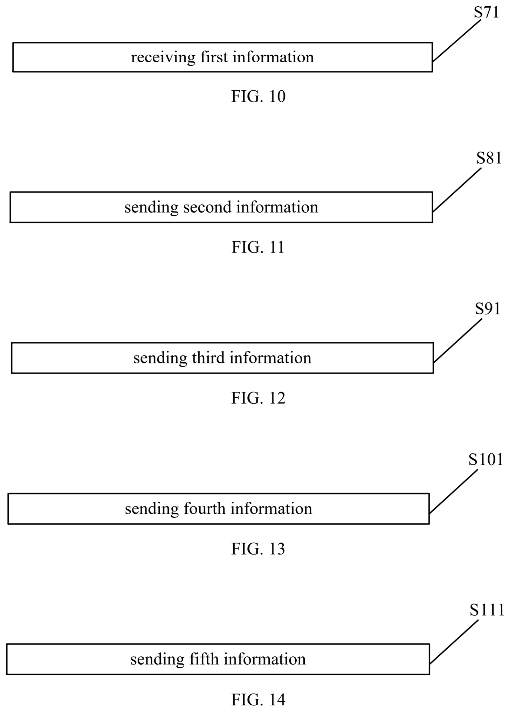

FIG. 10 is a flow chart illustrating yet another method for reporting a beam measurement result according to an illustrative embodiment.
FIG. 13 is a flow chart illustrating yet another method for reporting a beam measurement result according to an illustrative embodiment.
FIG. 14 is a flow chart illustrating yet another method for reporting a beam measurement result according to an illustrative embodiment.

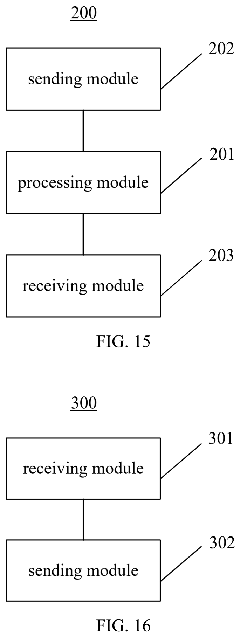

FIG. 15 is a block diagram illustrating an apparatus for reporting a beam measurement result according to an illustrative embodiment.
FIG. 16 is a block diagram illustrating another apparatus for reporting a beam measurement result according to an illustrative embodiment.

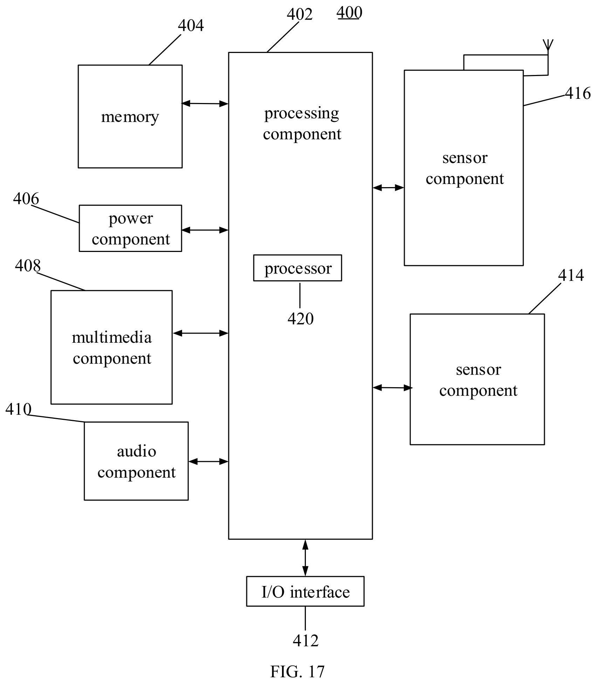

FIG. 17 is a block diagram illustrating a device for reporting a beam measurement result according to an illustrative embodiment.

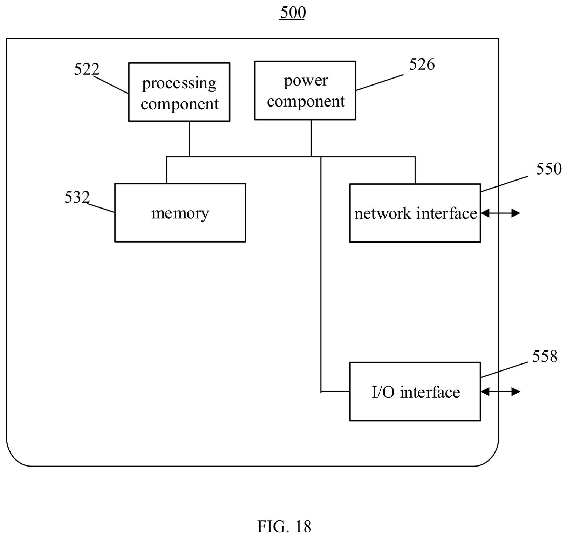

FIG. 18 is a block diagram illustrating another device for reporting a beam measurement result according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. Implementations set forth in the following description of illustrative embodiments do not represent all implementations consistent with the present disclosure.

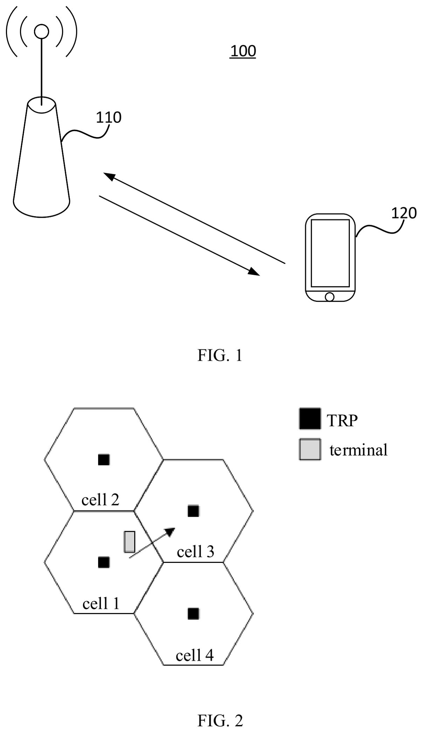

The communication methods of embodiments of the present disclosure are applicable to a wireless communication system 100 illustrated in FIG. 1. Referring to FIG. 1, the wireless communication system includes a network device 110 and a terminal 120. It may be understood that the wireless communication system shown in FIG. 1 is only for schematic illustration. The wireless communication system may also include other network devices, such as core network devices, wireless relay devices, and wireless backhaul devices, which are not shown in FIG 1. The number of network devices and the number of terminals included in the wireless communication system are not limited in the embodiments of the present disclosure.

It may be further understood that the wireless communication system in the embodiments of the present disclosure is a network that provides wireless communication functions. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be divided into a 2nd generation (2G) network, a 3G network, a 4G network, or a future evolution network, such as a 5G network, which may also be referred to as a new radio (NR) network, according to the capacity, rate, delay, and other factors of different networks. For ease of description, a wireless communication network will be sometimes abbreviated as a network in the present disclosure.

Further, the network device 110 involved in the present disclosure may also be referred to as a radio access network device. The radio access network device may be a base station, an evolved node B, a home base station, an access point (AP) in a wireless fidelity (Wi-Fi) system, a wireless relay node, a wireless backhaul node, a transmission point (TP), a transmission and reception point (TRP), or the like, or may also be a generation NodeB (gNB) in an NR system, or may also be a component or a part of a device that constitutes a base station, or the like. It is to be understood that the specific technology and specific device form adopted by the network device are not limited in the embodiments of the present disclosure. In the present disclosure, the network device may provide communication coverage for specific geographic areas and may communicate with terminals located within that coverage area (cell). In addition, when it comes to a vehicle-toeverything (V2X) communication systems, the network device may also be a vehicle-mounted device. It is to be understood that the specific technology and specific device form adopted by the network device are not limited in the embodiments of the present disclosure.

Further, the terminal 120 involved in the present disclosure, which may also be referred to as a terminal device, a user equipment (UE), a mobile station (MS), a mobile terminal (MT), or the like, is a device that provides voice and/or data connectivity to a user. For example, the terminal may be a handheld device with a wireless connection function, a vehicle-mounted device, or the like. At present, some examples of the terminal include a smart phone, a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in the embodiments of the present disclosure.

In the embodiments of the present disclosure, the network device 110 and the terminal 120 may adopt any feasible wireless communication technology to realize mutual data transmission. Here, a transmission channel corresponding to the network device 110 transmitting data to the terminal 120 is referred to as a downlink channel (DL), and a transmission channel corresponding to the terminal 120 transmitting data to the network device 110 is referred to as an uplink channel (UL). It is to be understood that the network device according to the embodiments of the present disclosure may be a base station. Of course, the network device may be any other possible network device, and the terminal may be any possible terminal, which are not limited in the embodiments of the present disclosure.

A scenario for L1/L2-based inter-cell mobility is proposed in a release (R) 18. FIG. 2 shows the LTM scenario. As may be seen from FIG. 2, the terminal moves between cells, for example, according to a direction of an arrow, the terminal moves from a cell 1 to a cell 3. It is to be understood that in the corresponding cell, the terminal may communicate with the network device of the cell through the TRP of the cell. In the scenario shown in FIG. 2, the network device may maintain multiple candidate cells for the terminal. As the terminal moves, in a case where a cell handover is needed, one cell may be selected from the multiple candidate cells as a target cell, and the terminal may switch to the target cell.

In some embodiments, in order to reduce a delay of the handover and complete the handover as quickly as possible, unlike a conventional cell handover, in this example, radio resource control (RRC) parameters of each candidate cell may be pre-configured to the terminal. The network device may determine whether to perform the cell handover according to a measurement result of an L1 measurement performed by the terminal. In a case where the network device determines that the cell handover is needed, the terminal may be triggered to hand over to the target cell via a dynamic handover signaling.

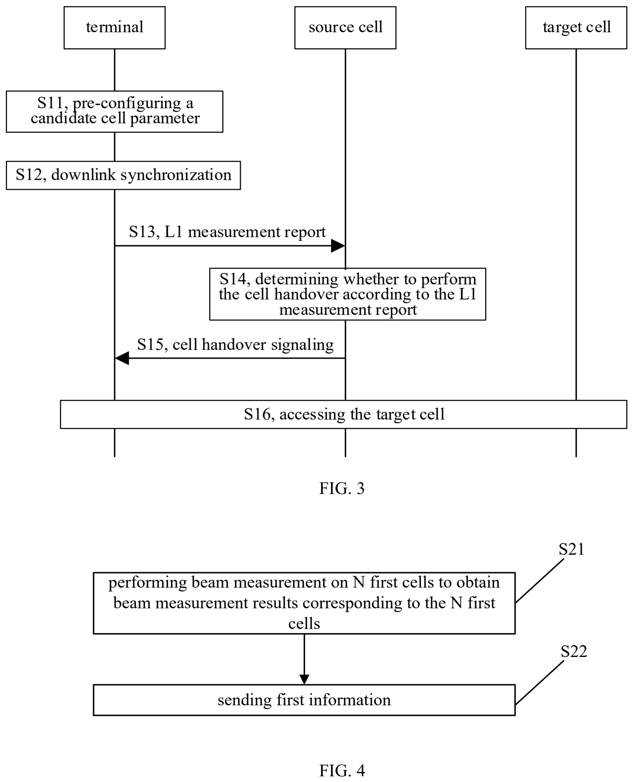

FIG. 3 is a schematic diagram illustrating interaction of a cell handover signaling according to an illustrative embodiment. FIG. 3 illustrates a process of a terminal performing a cell handover, which may include the following steps.

In step S11, a candidate cell parameter is pre-configured for the terminal.

In some embodiments, a network device may pre-configure parameters of one or more candidate cells for the terminal.

For example, a network device of a source cell may pre-configure the parameters of one or more candidate cells for the terminal. It may be understood that since the source cell establishes a connection with the terminal and provides a service for the terminal, the network device of the source cell may pre-configure the parameters of one or more candidate cells for the terminal, and the candidate cell does not establish the connection with the terminal, the candidate cell may not provide any service for the terminal, and thus may not configure the corresponding parameters for the terminal.

It is to be understood that the parameters of multiple candidate cells may be configured. For example, RRC parameters of each candidate cell are pre-sent to the terminal and stored in the terminal.

In some embodiments, the terminal may perform beam measurement on at least one beam in each candidate cell using the pre-configured parameters of the candidate cell, such as a beam measurement reference signal of the candidate cell, and obtain a beam measurement result corresponding to the candidate cell. It is to be understood that the beam measurement is typically performed on multiple beams in one candidate cell. Further, in a case where the candidate cell parameters of the multiple candidate cells are pre-configured, the beam measurement may be performed on the multiple different candidate cells respectively using the corresponding candidate cell parameters, to obtain the beam measurement results corresponding to the multiple candidate cells, respectively.

In step S12, the terminal performs downlink synchronization.

In some embodiments, the terminal may perform the downlink synchronization with a physical broadcast channel block (SSB) by receiving a synchronization signal.

In step S13, the terminal sends an L1 measurement report to the network device of the source cell.

In some embodiments, the terminal may send the measured L1 measurement report to the network device of the source cell. It may be understood that the source cell may be a serving cell in which the terminal is located before performing the cell handover.

In some embodiments, the terminal performs the beam measurement, which may be L1 measurement, on the candidate cell. For example, L1-reference signal receiving power (RSRP), L1-signal interference noise ratio (SINR) and the like are measured.

In step S14, the network device of the source cell determines whether to perform the cell handover according to the L1 measurement report.

In some embodiments, in a case where the network device of the source cell receives the L1 measurement report sent by the terminal, the network device of the source cell may determine whether the terminal needs to perform the cell handover according to the L1 measurement report.

For example, the network device of the source cell may determine that the terminal does not need to perform the cell handover.

For another example, the network device of the source cell may determine that the terminal needs to perform the cell handover. Of course, the network device of the source cell may further determine which new cell the terminal hand over to. For example, a cell of the terminal after having performed the cell handover may be referred to as a target cell. That is, the target cell is a serving cell after the terminal has performed the cell handover.

It is to be understood that the target cell may be a certain candidate cell that is selected as the target cell by the network device of the source cell from one or more candidate cells.

In step S15, the network device of the source cell sends a cell handover signaling to the terminal.

In some embodiments, in a case where the network device of the source cell determines that the terminal needs to perform the cell handover, the network device of the source cell may send the cell handover signaling to the terminal. The cell handover signaling may instruct the terminal to perform the cell handover.

In some embodiments, the cell handover signaling may also indicate the target cell.

In step S16, the terminal accesses the target cell.

In some embodiments, in a case where the terminal receives the cell handover signaling, the terminal may access the target cell, thereby completing the cell handover of the terminal.

It may be understood that in the flow shown in FIG. 3, the terminal needs to perform the L1 measurement on each candidate cell, and report the measurement result obtained by the measurement to the network device of the source cell, such that the network device of the source cell determines whether the terminal needs to perform the cell handover according to the measurement result. However, there is still no consensus on how to report the measurement result obtained from each candidate cell.

Therefore, the present disclosure provides a method and an apparatus for reporting a beam measurement result, a device, and a storage medium. The beam measurement is performed on the at least one candidate cell, and some or all of the beam measurement results measured are reported to the network device. Furthermore, the network device of the source cell is supported to determine whether the terminal performs the cell handover according to sufficient measurement results, thereby improving the accuracy and reliability of cell handover.

FIG. 4 is a flow chart illustrating a method for reporting a beam measurement result according to an illustrative embodiment. As shown in FIG. 4, the method is performed by a terminal and may include the following steps.

In step S21, beam measurement is performed on N first cells to obtain beam measurement results corresponding to the N first cells.

In some embodiments, the terminal may perform the beam measurement on the N first cells to obtain the beam measurement results corresponding to the N first cells.

N is a positive integer greater than 1, and the N first cells include at least one candidate cell.

For example, the N first cells may include only candidate cells. In this case, the N first cells include multiple candidate cells. For another example, the N first cells may include a source cell and a candidate cell. In this case, the N first cells may include the source cell and at least one candidate cell. It may be understood that the source cell represents a current serving cell of the terminal, or may be regarded as a serving cell that provides a service to the terminal before the terminal performs a cell handover. The candidate cell is a non-serving cell.

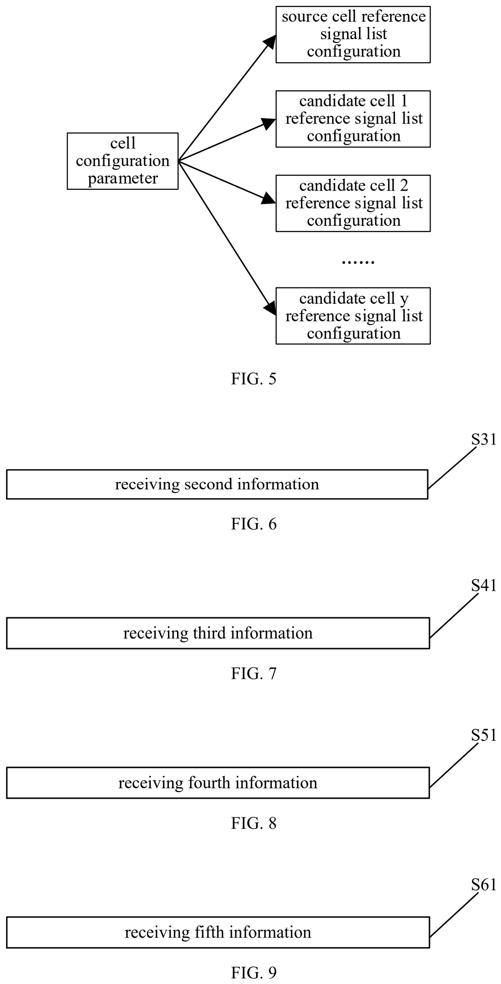

For example, the terminal may be pre-configured with configuration parameters corresponding to the N first cells. The configuration parameters are used for the terminal to perform measurement, such as L1 measurement, on the corresponding first cells. FIG. 5 is a schematic diagram illustrating a structure of the cell pre-configuration parameters according to an illustrative embodiment. As may be seen, the cell pre-configuration parameters may include a source cell reference signal list configuration and y candidate cell reference signal list configurations, in which y is a positive integer. Of course, in a case where the N first cells do not include the source cell, the cell pre-configuration parameters may include y candidate cell reference signal list configurations, and in this case y may be a positive integer greater than 1.

It can be understood that a reference signal list configuration of each cell may include a configuration parameter of at least one reference signal. Further, the L1 measurement is performed by a configuration parameter of each reference signal. Typically, the reference signal list configuration of each cell includes configuration parameters of multiple reference signals.

For example, the terminal may perform the beam measurement on the N first cells according to the pre-configuration parameters of the pre-configured cells to obtain the beam measurement results corresponding to the respective first cells.

In step S22, first information is sent.

In some embodiments, the terminal may send the first information to the network device. The first information includes a beam measurement result corresponding to at least one of the N first cells.

For example, the terminal performs the beam measurement on the N first cells in S21, and obtains the beam measurement result corresponding to each first cell. That is, the terminal obtains the beam measurement results corresponding to the N first cells. The terminal may select some or all of the beam measurement results corresponding to the N first cells and report them. For example, the beam measurement results of some cells are selected from the N beam measurement results and are reported, that is, the beam measurement results corresponding to some of the N first cells are reported. For another example, the N beam measurement results are reported, that is, the beam measurement results corresponding to the N first cells are reported.

It may be understood that, in a case of receiving the first information sent by the terminal, the network device may determine whether the terminal performs the cell handover according to the first information, and/or determine a target cell to which the terminal performs the cell handover.

In the present disclosure, the beam measurement is performed on the at least one candidate cell, and some or all of the measured beam measurement results are reported to the network device. Furthermore, the network device of the source cell is supported to determine whether the terminal performs the cell handover according to sufficient measurement results, thereby improving the accuracy and reliability of cell handover.

In the method for reporting the beam measurement result provided in the embodiments of the present disclosure, FIG. 6 is a flow chart illustrating another method for reporting a beam measurement result according to an illustrative embodiment. As shown in FIG. 6, the method may also include the following step.

In step S31, second information is received.

In some embodiments, the terminal may receive the second information sent by the network device. The second information is used to configure M beams corresponding to each of the at least one first cell included in the first information, and M is a positive integer.

For example, the terminal may receive the second information sent by the network device, and the second information is configured with the M beams corresponding to each of the at least one first cell. The terminal may determine a beam measurement result corresponding to each cell and include the beam measurement result in the first information in a case where the first information is sent. It may be understood that the beam measurement result corresponding to each of the at least one first cell in the first information may include measurement results of M beams among multiple beams measured by the first cell. That is, the beam measurement result corresponding to each of the at least one first cell is constituted by the measurement results corresponding to M beams in the first cell.

It should be understood that a numerical count M of beams corresponding to different cells may be the same or different, which is not limited in the present disclosure. Of course, in some embodiments, if the network device configures a same numerical count M of beams corresponding to each of the at least one first cell, only one M may be configured to indicate the numerical count of beams corresponding to each of the at least one first cell.

In some embodiments, for each cell, the M beams may be M beams with best measurement results in each of the at least one first cell reported. For example, the measurement results are sorted according to their sizes, and the measurement results corresponding to the first M beams are selected to form the beam measurement result of the cell.

Of course, it should be understood that a value of M is usually less than or equal to the numerical count of beams that are pre-configured for each cell for the beam measurement when the network device pre-configure the cell. For example, in a case where the network device pre-configures 5 beams/measurement reference signals for performing the beam measurement on a certain cell, M is typically less than or equal to 5.

However, it is worth noting that, in some cases, if M is larger than a numerical count of beams that are pre-configured for each cell to perform the beam measurement when the network device pre-configures each cell. For example, the network device pre-configures 5 beams/measurement reference signals for performing the beam measurement on the certain cell, and M is greater than 5. In this case, the first information sent by the terminal may be filled with specific bit information to complete bit filling. For example, in a case where the network device configures measuring five beams/measurement reference signals when the terminal performs beam measurement on cell 1, when the terminal determines a beam measurement result corresponding to cell 1 in the first information, the terminal may perform bit filling according to measurement results corresponding to the five beams/measurement reference signals to obtain the beam measurement result corresponding to cell 1. As can be understood, since the network device configures M beams corresponding to each cell included in the first information, and the numerical count of beams measured by the terminal does not reach M, the first information may be reported by the bit filling.

Of course, in some other embodiments, for each cell, if M is larger than the numerical count of beams that are pre-configured for each cell for the beam measurement when the network device pre-configures the cell, the first information may include only measurement results corresponding to the beams on which the beam measurement is actually performed without performing the bit filling. For example, the network device pre-configures five beams for performing the beam measurement on the certain cell, and M is greater than 5. In this case, the first information sent by the terminal may be obtained based on measurement results corresponding to the five beams.

It should be understood that the present disclosure does not limit the method for determining the first information in a case that M is larger than the numerical count of beams pre-configured for each cell for the beam measurement when the network device pre-configures the cell. The first information may be determined under various conditions, which is not limited in the present disclosure.

In the present disclosure, the network device configures the numerical count of beams corresponding to each cell reported by the terminal, and the network device of the source cell is supported to determine whether the terminal performs a cell handover according to sufficient measurement results, thereby improving the accuracy and reliability of cell handover.

In the method for reporting the beam measurement result provided in an embodiment of the present disclosure, the at least one first cell included in the first information is L first cells, L is determined according to a configuration of a network device, and L is a positive integer and less than or equal to N; and the at least one first cell included in the first information is determined by at least one of: determining the L first cells according to a first result of each of the N first cells, in which the first result of the first cell is determined according to a measurement result corresponding to each beam in the first cell; determining the L first cells according to a second result of each of the N first cells, in which the second result of the first cell is determined according to measurement results corresponding to M beams in the first cell, and the measurement results corresponding to the M beams satisfy a first measurement result condition; determining the L first cells according to a third result of each of the N first cells, in which the third result of the first cell is determined according to a measurement result of the first cell that satisfies a second measurement condition; or determining the L first cells according to a fourth result of each of the N first cells, in which the fourth result of the first cell is obtained by filtering a measurement result corresponding to at least one beam in the first cell.

In some embodiments, the first information may include beam measurement results corresponding to the L first cells, in which L may be determined according to the configuration of the network device, and L is a positive integer and less than or equal to N.

In some embodiments, the L first cells are determined according to the first result of each of the N first cells, in which the first result of the first cell is determined according to the measurement result corresponding to each beam in the first cell.

For example, for each of the N first cells, the measurement result corresponding to each beam in the first cell is calculated to obtain the first result of the first cell. The terminal may perform sorting according to the first results of the respective first cells, and determine sorted top L first cells. The L first cells are L first cells included in the first information.

The calculation of the measurement result corresponding to each beam in the first cell may include summing the measurement results corresponding to respective beams and calculating a weighted average value, or calculating variance, standard deviation, and the like. The specific calculation may be set according to an actual situation, which is not limited in the present disclosure.

It may be understood that the sorting may be performed from largest to smallest according to the first results, and then the L first cells are the sorted top L first cells.

It should be understood that the principle for determining the first cell in the first information in each embodiment of the present disclosure may be to select the top L first cells having the best beam quality or the best beam quality after calculation.

In some embodiments, the L first cells are determined according to the second result of each of the N first cells, in which the second result of the first cell is determined according to the measurement results corresponding to the M beams in the first cell, and the measurement results corresponding to the M beams satisfy the first measurement result condition.

For example, for each of the N first cells, the measurement results corresponding to the M beams in the first cell are calculated to obtain the second result of the first cell. The terminal may perform sorting according to the second results of the respective first cells, and determine the sorted top L first cells. The L first cells are L first cells included in the first information.

The calculation of the measurement results corresponding to the M beams in the first cell may include summing the measurement results corresponding to the respective beams and calculating a weighted average value, or calculating variance, standard deviation, and the like. The specific calculation may be set according to an actual situation, which is not limited in the present disclosure.

For example, the M beams may be beams with the measurement results satisfying the first measurement result condition in the first cell. For example, the first measurement result condition may be M beams with the best beam quality in the first cell.

It may be understood that the sorting may be performed from largest to smallest according to the second results, and then the L first cells are the top sorted L first cells.

In some embodiments, the L first cells are determined according to the third result of each of the N first cells, in which the third result of the first cell is determined according to a measurement result of the first cell that satisfies a second measurement condition.

For example, the third result of each of the N first cells is sorted, and the sorted top L first cells are determined. The L first cells are L first cells included in the first information.

For example, for each first cell, the third result of the first cell may be a measurement result satisfying the second measurement condition in the first cell.

For example, the second measurement condition may be a measurement result corresponding to a beam having the best beam quality that is selected from the first cell.

It may be understood that the sorting may be performed from largest to smallest according to the third results, and then the L first cells are the sorted top L first cells.

In some embodiments, the L first cells are determined according to a fourth result of each of the N first cells, in which the fourth result of the first cell is obtained by filtering a measurement result corresponding to at least one beam in the first cell.

For example, for each of N first cells, the measurement result corresponding to the at least one beam in the first cell is filtered to obtain a filtered measurement result. The terminal may determine the L first cells according to the filtered measurement result, according to the filtered measurement result of each beam in the first cell, or according to the filtered measurement results of the M beams in the first cell in combination with the above-described embodiments.

For each of N first cells, for example, the measurement results corresponding to respective beams in the first cell may be filtered directly. As another example, the first result of the first cell may be filtered, that is, an average measurement result of the first cell may be filtered. For another example, the second result of the first cell may be filtered, that is, an average measurement result of the M beams of the first cell may be filtered. It may be understood that filtering the measurement results corresponding to the respective beams in the first cell includes filtering the third result of the first cell.

In some embodiments, the filtering method may be L3 filtering. Alternatively, the filtering method may be a newly defined filtering method, for example, a filtering method dedicated to the present disclosure for filtering the measurement result. This is not limited in the present disclosure.

For each first cell, filtering the measurement result corresponding to at least one beam in the first cell may include: for any beam, recording measurement results of multiple measurements of the beam or measurement results of multiple measurements of the beam within a certain period of time; and calculating a weighted average value according to the measurement results of the multiple measurements of the beam, to obtain the measurement result of the beam after filtering. Of course, in other examples, variance, standard deviation, and the like may also be used to obtain the measurement result of the beam after filtering.

It can be understood that for the method for determining the L first cells according to the filtered measurement result, reference may be made to the above-described embodiments of determining the L first cells according to the measurement results corresponding to the respective beams in the first cell and the corresponding descriptions of the embodiments of determining the L first cells according to the measurement results corresponding to the M beams in the first cell, which will not be repeated in the present disclosure.

The present disclosure provides various ways to determine the first cell in the first information, thereby reporting some or all of the measured beam measurement results to the network device as needed. Furthermore, the network device of the source cell is supported to determine whether the terminal performs the cell handover according to sufficient measurement results, thereby improving the accuracy of the cell handover and ensuring the communication stability of the terminal after handover.

In the method for reporting the beam measurement result provided in embodiments of the present disclosure, the at least one first cell included in the first information includes at least a source cell; and determining the L first cells includes: determining L-1 first cells.

In some embodiments, the first information may include at least a beam measurement result of the source cell. That is, the L first cells in the first information include at least the source cell. For the terminal, the remaining L-1 first cells may be determined. The L-1 first cells may be candidate cells.

It may be understood that the terminal determines the L-1 first cells in the same manner as the above-described method for determining the L first cells, except that the numerical count of first cells is different. For details, reference may be made to the above-described corresponding embodiments, and the present disclosure will not be repeated here.

In the present disclosure, the first information may include at least the beam measurement result of the source cell, such that a network device of the source cell may compare a measurement result of the source cell and a measurement result of a candidate cell in real time, thereby determining whether the terminal performs the cell handover, and improving the accuracy and reliability of cell handover.

In the method for reporting the beam measurement result provided in the embodiments of the present disclosure, the at least one first cell included in the first information is A first cells, A is determined according to the terminal, and A is a positive integer and less than or equal to N; and the method further includes: determining a measurement threshold, or determining a measurement threshold and an offset value; and the at least one first cell included in the first information is determined by at least one of: determining the A first cells according to a first result of each of the N first cells and the measurement threshold, in which the first result of the first cell is determined according to a measurement result corresponding to each beam in the first cell; determining the A first cells according to a first result of each of the N first cells, the measurement threshold, and the offset value; determining the A first cells according to a second result of each of the N first cells and the measurement threshold, in which the second result of the first cell is determined according to measurement results corresponding to M beams in the first cell, and the measurement results corresponding to the M beams satisfy a first measurement result condition; determining the A first cells according to a second result of each of the N first cells, the measurement threshold, and the offset value; determining the A first cells according to a fourth result of each of the N first cells and the measurement threshold, in which the fourth result of the first cell is obtained by filtering a measurement result corresponding to at least one beam in the first cell; or determining the A first cells according to a fourth result of each of the N first cells, the measurement threshold, and the offset value.

In some embodiments, the first information may include beam measurement results corresponding to the A first cells. A may be determined by the terminal itself. A is a positive integer less than or equal to N.

In some embodiments, the terminal may also determine the measurement threshold.

For example, the terminal measures the threshold according to a configuration of the network device. For another example, a predefined rule predefines the measurement threshold, and the terminal determines the measurement threshold according to the predefined rule.

In some embodiments, the terminal may also determine the measurement threshold and the offset value.

For example, the terminal measures the threshold and the offset value based on a configuration of the network device. For another example, the predefined rule predefines the measurement threshold, and the terminal determines the measurement threshold and the offset value according to the predefined rule.

In some embodiments, the A first cells are determined according to the first result of each of the N first cells and the measurement threshold, in which the first result of the first cell is determined according to the measurement result corresponding to each beam in the first cell.

For example, for each of the N first cells, the measurement result corresponding to each beam in the first cell is calculated to obtain the first result of the first cell. The terminal may determine the A first cells with the first results satisfying the measurement threshold, and determine that the first information includes the beam measurement results corresponding to the A first cells.

The calculation of the measurement results corresponding to the respective beams in the first cell may include summing the measurement results corresponding to the respective beams and calculating a weighted average value, or calculating variance, standard deviation, and the like. The specific calculation may be set according to an actual situation, which is not limited in the present disclosure.

It should be understood that the principle for determining the first cell in the first information in each embodiment of the present disclosure may be to select the top A first cells having the best beam quality or the best beam quality after calculation.

In some embodiments, the A first cells are determined according to the first result of each of the N first cells, the measurement threshold, and the offset value.

For example, for each of the N first cells, the measurement result corresponding to each beam in the first cell is calculated to obtain the first result of the first cell. The terminal may determine A first cells whose first results satisfy the measurement threshold plus the offset value, and determine that the first information includes the beam measurement results corresponding to the A first cells.

The calculation of the measurement results corresponding to the respective beam in the first cell may include: summing the measurement results corresponding to the respective beams and calculating a weighted average value, or calculating variance, standard deviation, and the like. The specific calculation may be set according to an actual situation, which is not limited in the present disclosure.

In some embodiments, the A first cells are determined according to the second result of each of the N first cells and the measurement threshold, in which the second result of the first cell is determined according to measurement results corresponding to M beams in the first cell, and the measurement results corresponding to the M beams satisfy the first measurement result condition.

For example, for each of the N first cells, the measurement results corresponding to the M beams in the first cell are calculated to obtain the second result of the first cell. The terminal may determine the A first cells according to the respective first cells whose second results satisfy the measurement threshold, and determine that the first information includes the beam measurement results corresponding to the A first cells.

The calculation of the measurement results corresponding to the M beams in the first cell may include summing the measurement results corresponding to the respective beams and calculating a weighted average value, or calculating variance, standard deviation, and the like. The specific calculation may be set according to an actual situation, which is not limited in the present disclosure.

For example, the M beams may be beams with the measurement results satisfying the first measurement result condition in the first cell. For example, the first measurement result condition may be M beams with the best beam quality in the first cell.

In some embodiments, the A first cells are determined according to the second result of each of the N first cells, the measurement threshold, and the offset value.

For example, for each of the N first cells, the measurement results corresponding to M beams in the first cell are calculated to obtain the second result of the first cell. The terminal may determine the A first cells according to the second result of each first cell that satisfies the measurement threshold plus the offset value, and determine that the first information includes the beam measurement results corresponding to the A first cells.

In some embodiments, the A first cells are determined according to the fourth result of each of the N first cells and the measurement threshold, in which the fourth result of the first cell is obtained by filtering the measurement result corresponding to at least one beam in the first cell.

For example, for each of N first cells, the measurement result corresponding to at least one beam in the first cell is filtered to obtain a filtered measurement result. The terminal may determine the A first cells according to the filtered measurement result, according to a filtered measurement result of the respective beams in the first cell and the measurement threshold, or according to the filtered measurement result of the M beams in the first cell and the measurement threshold in combination with the above-described embodiments.

For each of N first cells, for example, the measurement result corresponding to each beam in the first cell may be filtered directly. As another example, the first result of the first cell may be filtered, that is, an average measurement result of the first cell may be filtered. For another example, the second result of the first cell may be filtered, that is, an average measurement result of M beams of the first cell may be filtered. It may be understood that filtering the measurement result corresponding to each beam in the first cell includes filtering the third result in the first cell.

In some embodiments, the filtering method may be L3 filtering. Alternatively, the filtering method may be a newly defined filtering method, for example, a filtering method dedicated to the present disclosure for filtering the measurement result. This is not limited in the present disclosure.

For each first cell, filtering the measurement result corresponding to the at least one beam in the first cell may include: for any beam, recording measurement results of multiple measurements of the beam or measurement results of multiple measurements of the beam within a certain period of time; and calculating a weighted average value based on the measurement results of the multiple measurements of the beam, to obtain the measurement result of the beam after filtering. Of course, in some other examples, the variance, standard deviation, and the like may also be calculated to obtain the measurement result of the beam after filtering.

It can be understood that the method for determining the A first cells according to the filtered measurement result may refer to the above-described embodiments for determining the A first cells according to the measurement result corresponding to each beam in the first cell and the measurement threshold, and the corresponding description of embodiments in which the A first cells are determined according to the measurement result and the measurement threshold corresponding to the M beams in the first cell, the present disclosure will not be repeated herein.

In some embodiments, the A first cells are determined according to the fourth result of each of the N first cells, the measurement threshold, and the offset value.

For example, for each of N first cells, the measurement result corresponding to at least one beam in the first cell is filtered to obtain a filtered measurement result. The terminal may determine the A first cells according to the filtered measurement result, according to the filtered measurement result and the measurement threshold plus the offset value of each beam in the first cell, or according to the filtered measurement result and the measurement threshold plus the offset value of the M beams in the first cell in combination with the above-described embodiment.

It may be understood that for the method for determining the A first cells according to the filtered measurement result, reference can be made to the above-described embodiments in which the A first cells are determined according to the measurement result corresponding to each beam in the first cell and the measurement threshold plus the offset value, and the corresponding description of the embodiments in which the A first cells are determined according to the measurement results corresponding to the M beams in the first cell and the measurement threshold plus the offset value, which will not be repeated in the present disclosure.

The present disclosure provides various ways to determine the first cell in the first information, such that the network device of the source cell can reduce the overhead of reporting while determining whether the terminal performs the cell handover according to sufficient measurement results.

In the methods for reporting the beam measurement result provided in the embodiments of the present disclosure, FIG. 7 is a flow chart illustrating another method for reporting a beam measurement result according to an illustrative embodiment. As shown in FIG. 7, determining a measurement threshold may also include the following steps.

In step S41, third information is received.

In some embodiments, a terminal may receive the third information sent by a network device.

In some embodiments, the third information is used to configure a reporting condition, in which the reporting condition is a condition related to the measurement threshold.

For example, the reporting condition may be the measurement threshold.

For example, the reporting condition may be a condition that satisfies the measurement threshold, and satisfying the measurement threshold may be greater than or equal to the measurement threshold.

In some embodiments, the third information is used to configure the reporting condition, and the reporting condition is a condition related to the measurement threshold and the offset value.

For example, the reporting conditions may be the measurement threshold and the offset value.

For example, the reporting condition may be a condition that satisfies the measurement threshold plus the offset value, and satisfying the measurement threshold may be greater than or equal to the measurement threshold plus the offset value.

In some embodiments, the third information is used to configure the reporting condition. The reporting condition may be other possible reporting conditions. For example, the terminal may be triggered to send the first information according to any other possible reporting condition.

The present disclosure may configure corresponding parameters, such that the terminal may determine a numerical count of first cells in the first information. A network device of a source cell determines whether the terminal performs a cell handover according to a measured candidate cell, thereby reducing unnecessary reporting and reducing the overhead of reporting.

In the methods for reporting the beam measurement result provided in the embodiments of the present disclosure, FIG. 8 is a flow chart illustrating another method for reporting a beam measurement result according to an illustrative embodiment. As shown in FIG. 8, the method may also include the following step.

In step S51, fourth information is received.

In some embodiments, a terminal may receive the fourth information sent by a network device. The fourth information indicates a maximum value X of a numerical count of first cells in the first information, and X is a positive integer.

For example, the terminal receives the fourth information sent by the network device. The fourth information indicates the maximum value X of the numerical count of first cells in the first information. The terminal determines, according to the fourth information, that the numerical count of first cells included in the first information may not exceed X.

For example, in a case where the terminal determines that the numerical count of first cells in the first information is A, and A is less than or equal to X, the first information may include beam measurement results corresponding to A cells.

For another example, in a case where the terminal determines that the numerical count of first cells in the first information is A, and A is greater than X, the first information may include X first cells. It may be understood that the X first cells are determined according to the A first cells.

For example, the terminal determines the beam measurement results corresponding to the A first cells, but A is greater than X. The terminal determines that the beam measurement results corresponding to the X cells may be included in the first information. The terminal may select the beam measurement results corresponding to the X first cells from the beam measurement results corresponding to the A first cells, and carry the beam measurement results corresponding to the X first cells in the first information.

The present disclosure can set the maximum numerical count of first cells in the first information, thereby avoiding reporting too much beam measurement results of the cells, reducing consumption of communication resources, and improving the efficiency of cell handover.

In the methods for reporting the beam measurement result provided in the embodiments of the present disclosure, the at least one first cell included in the first information includes at least a source cell; and determining the A first cells includes: determining A-1 first cells.

In some embodiments, the first information may include at least a beam measurement result of the source cell. In other words, the A first cells in the first information include at least the source cell. For the terminal, the remaining A-1 first cells may be determined. The A-1 first cells may be the candidate cells.

It may be understood that the terminal determines the A-1 first cells in the same manner as the above-described method for determining the A first cells, except that the numerical count of first cells is different. For details, reference can be made to the above-described corresponding embodiments, which will not be repeated here in the present disclosure.

In the present disclosure, the first information may include the at least the beam measurement result of the source cell, such that the network device of the source cell may compare a measurement result of the source cell and a measurement result of a candidate cell in real time, thereby determining whether the terminal performs the cell handover, and improving the accuracy and reliability of cell handover.

In the methods for reporting the beam measurement result provided in the embodiments of the present disclosure, the first information includes one measurement result and at least one difference value; the first information includes, for each of the L first cells, for each of the A first cells, or for each of the X first cells, one measurement result and at least one difference value; or the first information sequentially includes, for each of the L first cells, for each of the A first cells, or for each of the X first cells, the measurement result corresponding to at least one beam in the cell in a descending order or an ascending order of the measurement result.

In some embodiments, the first information may include one measurement result and at least one difference value.

For example, the first information may include a measurement result of one beam in one cell. Measurement results of remaining beams in the cell may be indicated by difference values between the measurement result and respective measurement results of the remaining beams. For example, the first information includes a measurement result of beam 1 in cell 1. The measurement results of the remaining beams in cell 1 may be indicated by the difference values, and each of the difference value may be a difference value between the respective measurement results of the remaining beams and the measurement result of the beam 1. That is, a measurement result of a beam 2 may be determined by a difference value 1. A measurement result of beam 2 may be obtained by the measurement result of beam 1 and difference value 1. A measurement result of beam 3 may be determined by difference value 2. The measurement result of beam 3 may be obtained by the measurement result of beam 1 and difference value 2. And so on. Of course, the measurement result of each beam in cell 2 may be obtained by a difference value between the measurement result of the beam in cell 2 and the measurement result of beam 1 in cell 1.

Reference may be made to a schematic table of the first information shown in Table 1.

**Table 1**

| cell 1 | |
|---|---|
| beam 1 | beam measurement result |
| beam 2 | difference value 1 |
| ...... | ...... |
| beam q | difference value q'-1 |

| cell 2 | |
|---|---|
| beam q+1 | difference value q' |
| ...... | ...... |

Different beams are indicated by reference signal identifiers. A reference signal is indicated by a corresponding reference signal identifier, such that a beam used for receiving the reference signal is used as a beam for beam detection. In Table 1, q is a positive integer greater than 1, and q' is a positive integer greater than 1.

In some embodiments, Table 2 shows another schematic table of the first information.

**Table 2**

| cell 1 | |
|---|---|
| cell 2 | |
| ...... | |
| beam 1 | beam measurement result |
| beam 2 | difference value 1 |
| ...... | ...... |
| beam q | difference value q'-1 |
| beam q+1 | difference value q' |
| ...... | ...... |

It may be seen that Table 2 is different from Table 1 in that different cells may be indicated first in the first information, and then the beam measurement result of each beam in each cell may be indicated. The cell may be indicated by a cell identifier. It can be understood that since the numerical count of beams in each of the first cells in the first information is determined, it is known which beams correspond to which cells according to a predetermined numerical count of beams. If the numerical count of beams in the first cell is q, it may be known that beam 1 to beam q in Table 2 correspond to cell 1, and beam q+1 to beam 2q may correspond to cell 2, and the like.

In some embodiments, the first information may include, for each of the L first cells, for each of the A first cells, or for each of the X first cells, one measurement result and the at least one difference value.

For example, for each of the cells in the first information, such as each of the L first cells, or each of the A first cells, or each of the X first cells, the measurement result of one beam of the cell may be included. Measurement results of remaining beams in the cell may be indicated by difference values between the measurement result and the respective measurement results of the remaining beams. For example, the first information includes a measurement result of beam 1 in cell 1. The measurement results of the remaining beams in cell 1 may be indicated by difference values, and respective difference values may be difference values between the measurement result of the beam 1 and the respective measurement results of the remaining beams. That is, a measurement result of beam 2 may be determined by difference value 1. The measurement result of beam 2 may be obtained by measurement result of beam 1 and difference value 1. The measurement result of beam 3 may be determined by difference value 2. The measurement result of beam 3 may be obtained by the measurement result of beam 1 and difference value 2, and the like.

Reference may be made to another schematic table of the first information shown in Table 3.

**Table 3**

| cell 1 | |
|---|---|
| beam 1 | beam measurement result 1 |
| beam 2 | difference value 1 |
| ...... | ...... |
| beam q | difference value q'-1 |

| cell 2 | |
|---|---|
| beam q+1 | beam measurement result 1 |
| beam q+2 | difference value q' |
| ...... | ...... |
| beam 2q | difference value q'-2 |
| ...... | ...... |

In some embodiments, for each of the L first cells, for each of the A first cells, or for each of the X first cells, the first information may sequentially include the measurement result corresponding to at least one beam in each of the cells in descending or ascending order of measurement results.

For example, for each of the cells in the first information, such as each of the L first cells, or each of the A first cells, or each of the X first cells, the best measurement result of each cell may be included, and the second best measurement result of each cell may be included, and so on.

Reference may be made to another schematic table of the first information shown in Table 4.

**Table 4**

| | |
|---|---|
| cell 1 beam 1 | beam measurement result 11 |
| cell 2 beam 1 | beam measurement result 21 |
| ...... | ...... |
| cell B beam 1 | beam measurement result b1 |
| cell 1 beam 2 | beam measurement result 12 |
| cell 2 beam 2 | beam measurement result 22 |
| ...... | ...... |
| cell B beam 2 | beam measurement result b2 |
| ...... | ...... |

A value of B may be A, L or X. That is, the first B lines in the first information are used to represent the beam with the best beam measurement result in each of the B cells and the corresponding beam measurement result. Lines B+1 to 2B in the first information are used to represent the beam with the second best beam measurement result in each of the B cells and the corresponding beam measurement result, and so on.

The present disclosure provides various expressions in the first information, such that the network device of the source cell determines whether the terminal performs the cell handover according to sufficient measurement results, thereby improving the accuracy and reliability of cell handover.

In the methods for reporting the beam measurement result provided in the embodiments of the present disclosure, the first information includes a specific bit, and the specific bit indicates a numerical count of first cells in the first information.

In some embodiments, the first information may include the specific bit. The specific bit indicates a numerical count of first cells in the first information.

For example, in a case where the terminal determines the numerical count A of the first cells in the first information, the first information may include the specific bit. The specific bit indicates A determined by the terminal to inform the network device that the first information sent by the terminal includes how many cells corresponding to the beam measurement results.

In some embodiments, the specific bits may be first C bits in the first information, in which C is a positive integer.

For example, the numerical count of first cells indicated by 1 bit is at most 2. For another example, the numerical count of first cells indicated by 2 bit is at most 4. For another example, the numerical count of first cells indicated by 3 bit is at most 8. Therefore, the numerical count of bits C may be set according to the actual situation, and the numerical count of the first cells in the first information may be indicated by the C bits.

In the present disclosure, the first information may also indicate the numerical count of first cells included, and report some or all of the beam measurement results measured to the network device. Furthermore, the network device of the source cell is supported to determine whether the terminal performs the cell handover according to sufficient measurement results, thereby improving the accuracy and stability of cell handover.

In the methods for reporting the beam measurement result provided in the embodiments of the present disclosure, FIG. 9 is a flow chart illustrating another method for reporting a beam measurement result according to an illustrative embodiment. As shown in FIG. 9, the method may also include the following step.

In step S61, fifth information is received.

In some embodiments, a terminal may receive the fifth information sent by a network device. The fifth information is used to configure a reference signal parameter and a reporting resource, in which a reference signal corresponding to the reference signal parameter is used to perform the beam measurement, and the reporting resource is a time domain/frequency domain resource used for sending the first information. It can be understood that the time domain/frequency domain resource includes the time domain resource and/or the frequency domain resource.

For example, the terminal may determine on which beam the beam measurement is performed according to the reference signal parameter in the fifth information. The terminal may also determine the time domain resource and/or the frequency domain resource for sending the first information according to the reporting resource, such that the terminal sends the first information according to the time domain resource and/or the frequency domain resource.

In the present disclosure, the information for instructing the terminal to perform the beam measurement reporting may be received, thereby sending the first information according to the information. Furthermore, the network device of the source cell is supported to determine whether the terminal performs the cell handover according to sufficient measurement results, thereby improving the accuracy and stability of cell handover.

Based on the same idea, the present disclosure also provides a method for reporting a beam measurement result performed by the network device.

FIG. 10 is a flow chart illustrating another method for reporting a beam measurement result according to an illustrative embodiment. As shown in FIG. 10, the method is performed by a network device and may include the following steps.

In step S71, first information is received.

In some embodiments, the network device may receive the first information sent by a terminal, in which the first information includes a beam measurement result corresponding to at least one of N first cells.

For example, the terminal performs beam measurement on the N first cells, and obtains the beam measurement result corresponding to each first cell. That is, the terminal obtains the beam measurement results corresponding to the N first cells. The terminal may select some or all of the beam measurement results corresponding to the N first cells and report them. For example, the beam measurement results of some cells are selected from N beam measurement results and reported, that is, the beam measurement results corresponding to some of the N first cells are reported. For another example, the N beam measurement results are reported, that is, the beam measurement results corresponding to the N first cells are reported.

It may be understood that, in a case of receiving the first information sent by the terminal, the network device may determine whether the terminal performs the cell handover according to the first information, and/or determine a target cell to which the terminal performs the cell handover.

N is a positive integer greater than 1, and the N first cells include at least one candidate cell.

For example, the N first cells may include only candidate cells. In this case, the N first cells include multiple candidate cells. For another example, the N first cells may include a source cell and a candidate cell. In this case, the N first cells may include the source cell and at least one candidate cell. It may be understood that the source cell represents a current serving cell of the terminal, or may be regarded as a serving cell that provides a service to the terminal before the terminal performs a cell handover. The candidate cell is a non-serving cell.

For example, the network device may pre-configure the terminal with configuration parameters corresponding to the N first cells. The configuration parameters are used for the terminal to perform measurement, such as L1 measurement, on the corresponding first cells. For example, as shown in FIG. 5, the cell pre-configuration parameters may include a source cell reference signal list configuration and y candidate cell reference signal list configurations, in which y is a positive integer. Of course, in a case where the N first cells do not include the source cell, the cell pre-configuration parameters may include y candidate cell reference signal list configurations, and in this case y may be a positive integer greater than 1.

It can be understood that a reference signal list configuration of each cell may include a configuration parameter of at least one reference signal. Further, the L1 measurement is performed by a configuration parameter of each reference signal. Typically, the reference signal list configuration of each cell includes configuration parameters of multiple reference signals.

In the present disclosure, the beam measurement is performed on at least one candidate cell, and some or all of the measured beam measurement results are reported to the network device. Furthermore, the network device of the source cell is supported to determine whether the terminal performs the cell handover according to sufficient measurement results, thereby improving the accuracy and reliability of cell handover.

In the methods for reporting the beam measurement result provided in the embodiments of the present disclosure, FIG. 11 is a flow chart illustrating another method for reporting a beam measurement result according to an illustrative embodiment. As shown in FIG. 11, the method may also include the following step.

In step S81, second information is sent.

In some embodiments, a network device may send the second information to a terminal. The second information is used to configure M beams corresponding to each of the at least one first cell included in the first information, and M is a positive integer.

It is understood that for the descriptions of the various embodiments of the second information, reference can be made to the descriptions of the corresponding embodiments and their associated embodiments on the terminal-side, and will not be repeated here in the present disclosure.

In the present disclosure, the network device configures a numerical count of beams corresponding to each cell reported by the terminal, and a network device of a source cell is supported to determine whether the terminal performs a cell handover according to sufficient measurement results, thereby improving the accuracy and reliability of cell handover.

In the method for reporting the beam measurement result provided in an embodiment of the present disclosure, the at least one first cell included in the first information is L first cells, L is determined according to a configuration of a network device, and L is a positive integer and less than or equal to N; and the at least one first cell included in the first information is determined by at least one of: determining the L first cells according to a first result of each of the N first cells, in which the first result of the first cell is determined according to a measurement result corresponding to each beam in the first cell; determining the L first cells according to a second result of each of the N first cells, in which the second result of the first cell is determined according to measurement results corresponding to M beams in the first cell, and the measurement results corresponding to the M beams satisfy a first measurement result condition; determining the L first cells according to a third result of each of the N first cells, in which the third result of the first cell is determined according to a measurement result of the first cell that satisfies a second measurement condition; or determining the L first cells according to a fourth result of each of the N first cells, in which the fourth result of the first cell is obtained by filtering a measurement result corresponding to at least one beam in the first cell.

It is understood that for the descriptions of the various embodiments for determining the L first cells in the first information, reference can be made to the descriptions of the corresponding embodiments and their associated embodiments on the terminal, and will not be repeated here in the present disclosure.

The present disclosure provides various ways to determine the first cell in the first information, thereby some or all of the measured beam measurement results are reported to the network device as needed. Furthermore, the network device of the source cell is supported to determine whether the terminal performs the cell handover according to sufficient measurement results, thereby improving the accuracy of the cell handover and ensuring the communication stability of the terminal after handover.

In the methods for reporting the beam measurement result provided in the embodiments of the present disclosure, the at least one first cell included in the first information includes at least a source cell; and determining the L first cells includes: determining L-1 first cells.

It is understood that for the descriptions of the various embodiments for determining the first information, reference can be made to the descriptions of the corresponding embodiments and their associated embodiments on the terminal, and will not be repeated here in the present disclosure.

In the preset disclosure, the first information may at least include the beam measurement result of the source cell, thereby supporting the network device of the source cell to compare the measurement result of the source cell with a measurement result of a candidate cell in real time, determining whether the terminal performs the cell handover, and improving the accuracy and reliability of cell handover.

In the method for reporting the beam measurement result provided in the embodiments of the present disclosure, the at least one first cell included in the first information is A first cells, A is determined according to the terminal, and A is a positive integer and less than or equal to N; and the method further includes: sending third information, in which the third information is used to configure a reporting condition, and the reporting condition is a condition related to a measurement threshold, or the reporting condition is a condition related to a measurement threshold and an offset value; and the at least one first cell included in the first information is determined by at least one of: determining the A first cells according to a first result of each of the N first cells and the measurement threshold, in which the first result of the first cell is determined according to a measurement result corresponding to each beam in the first cell; determining the A first cells according to a first result of each of the N first cells, the measurement threshold, and the offset value; determining the A first cells according to a second result of each of the N first cells and the measurement threshold, in which the second result of the first cell is determined according to measurement results corresponding to M beams in the first cell, and the measurement results corresponding to the M beams satisfy a first measurement result condition; determining the A first cells according to a second result of each of the N first cells, the measurement threshold, and the offset value; determining the A first cells according to a fourth result of each of the N first cells and the measurement threshold, in which the fourth result of the first cell is obtained by filtering a measurement result corresponding to at least one beam in the first cell; or determining the A first cells according to a fourth result of each of the N first cells, the measurement threshold, and the offset value.

In some embodiments, FIG. 12 is a flow chart illustrating another method for reporting a beam measurement result according to an illustrative embodiment. As shown in FIG. 12, the method may include the following steps.

In step S91, third information is sent.

In some embodiments, a network device may sent the third information to a terminal.

It is understood that for the descriptions of the various embodiments for the third information, reference can be made to the descriptions of the corresponding embodiments and their associated embodiments on the terminal, and will not be repeated here in the present disclosure.

It is understood that for the descriptions of the various embodiments for A first cells in the first information, reference can be made to the descriptions of the corresponding embodiments and their associated embodiments on the terminal, and will not be repeated here in the present disclosure.

The present disclosure provides various ways to determine the first cell in the first information, thereby reducing the overhead of reporting while supporting the network device of the source cell to determine whether the terminal performs the cell handover according to sufficient measurement results.

In the methods for reporting the beam measurement result provided in the embodiments of the present disclosure, FIG. 13 is a flow chart illustrating another method for reporting a beam measurement result according to an illustrative embodiment. As shown in FIG. 13, the method may also include the following step.

In step S101, fourth information is sent.

In some embodiments, a network device may send the fourth information to a terminal. The fourth information indicates a maximum value X of a numerical count of first cells in the first information, and X is a positive integer.

For example, the network device may send the fourth information to the terminal. The fourth information indicates the maximum value X of the numerical count of first cells in the first information. The terminal determines, according to the fourth information, that the numerical count of first cells included in the first information may not exceed X.

For example, in a case where the terminal determines that the numerical count of first cells in the first information is A, and A is less than or equal to X, the first information may include beam measurement results corresponding to A cells.

For another example, in a case where the terminal determines that the numerical count of first cells in the first information is A, and A is greater than X, the first information may include X first cells. It may be understood that the X first cells are determined according to the A first cells.

For example, in a case where the terminal determines the beam measurement results corresponding to the A first cells, but A is greater than X, the first information includes the beam measurement results corresponding to the X cells. The terminal may select the beam measurement results corresponding to the X first cells from the beam measurement results corresponding to the A first cells, and carry the beam measurement results corresponding to the X first cells in the first information. Therefore, the first information received by the network device only includes the beam measurement results corresponding to the X first cells.

The present disclosure can set the maximum numerical count of first cells in the first information, thereby avoiding reporting too much beam measurement results of the cells, reducing consumption of communication resources, and improving the efficiency of cell handover.

In the methods for reporting the beam measurement result provided in the embodiments of the present disclosure, the at least one first cell included in the first information includes at least a source cell; and determining the A first cells includes: determining A-1 first cells.

It is understood that for the descriptions of the various embodiments for the first information, reference can be made to the descriptions of the corresponding embodiments and their associated embodiments on the terminal, which will not be repeated here in the present disclosure.

In the present disclosure, the first information may include the at least the beam measurement result of the source cell, such that the network device of the source cell may compare a measurement result of the source cell and a measurement result of a candidate cell in real time, thereby determining whether the terminal performs the cell handover, and improving the accuracy and reliability of cell handover.

In the methods for reporting the beam measurement result provided in the embodiments of the present disclosure, the first information includes one measurement result and at least one difference value; the first information includes, for each of the L first cells, for each of the A first cells, or for each of the X first cells, one measurement result and at least one difference value; or the first information sequentially includes, for each of the L first cells, for each of the A first cells, or for each of the X first cells, the measurement result corresponding to at least one beam in the cell in a descending order or an ascending order of the measurement result.

It is understood that for the descriptions of the various embodiments for the first information, reference can be made to the descriptions of the corresponding embodiments and their associated embodiments on the terminal, which will not be repeated here in the present disclosure.

The present disclosure provides various forms of the first information, such that the network device of the source cell determines whether the terminal performs the cell handover according to sufficient measurement results, thereby improving the accuracy and reliability of cell handover.

In the methods for reporting the beam measurement result provided in the embodiments of the present disclosure, the first information includes a specific bit, and the specific bit indicates a numerical count of first cells in the first information.

It is understood that for the descriptions of the various embodiments for the first information, reference can be made to the descriptions of the corresponding embodiments and their associated embodiments on the terminal, which will not be repeated here in the present disclosure.

In the present disclosure, the first information can also indicate the numerical count of first cells included, and report some or all of the beam measurement results measured to the network device. Furthermore, the network device of the source cell is supported to determine whether the terminal performs the cell handover according to sufficient measurement results, thereby improving the accuracy and stability of cell handover.

In the methods for reporting the beam measurement result provided in the embodiments of the present disclosure, FIG. 14 is a flow chart illustrating another method for reporting a beam measurement result according to an illustrative embodiment. As shown in FIG. 14, the method may also include the following step.

In step S111, fifth information is sent.

In some embodiments, a network device may send the fifth information sent by a terminal. The fifth information is used to configure a reference signal parameter and a reporting resource, in which a reference signal corresponding to the reference signal parameter is used to perform the beam measurement, and the reporting resource is a time domain/frequency domain resource used for sending the first information.

It is understood that for the descriptions of the various embodiments for the fifth information, reference can be made to the descriptions of the corresponding embodiments and their associated embodiments on the terminal, which will not be repeated here in the present disclosure.

In the present disclosure, the information for instructing the terminal to perform the beam measurement reporting may be received, thereby sending the first information according to the information. Furthermore, the network device of the source cell is supported to determine whether the terminal performs the cell handover according to sufficient measurement results, thereby improving the accuracy and stability of cell handover.

It should be noted that those skilled in the art may understand that the above-mentioned various implementations/embodiments involved in the embodiments of the present disclosure may be used together with the aforementioned embodiments or independently. Whether used alone or in combination with the aforementioned embodiments, the implementation principle is similar. In implementations of the present disclosure, some embodiments are described using implementations that are used together. Of course, those skilled in the art may understand that such illustration is not a limitation of the embodiments of the present disclosure.

Based on the same concept, embodiments of the present disclosure also provide an apparatus and a device for reporting a beam measurement result.

It may be understood that, the apparatus and the device for reporting the beam measurement result provided by the embodiments of the present disclosure includes corresponding hardware structures and/or software modules for performing various functions in order to implement the above-mentioned functions. The embodiments of the present disclosure may be implemented in a form of hardware or a combination of hardware and computer software in combination with units and algorithm steps of each example disclosed in the embodiments of the present disclosure. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of the embodiments of the present disclosure.

FIG. 15 is a block diagram illustrating an apparatus for reporting a beam measurement result according to an illustrative embodiment. Referring to FIG. 15, the apparatus 200 includes a processing module 201, configured to perform beam measurement on N first cells to obtain beam measurement results corresponding to the N first cells, in which N is a positive integer greater than 1, and the N first cells includes at least one candidate cell; and a sending module 202, configured to send first information, in which the first information includes a beam measurement result corresponding to at least one of the N first cells.

In the present disclosure, the beam measurement is performed on at least one candidate cell, and some or all of the measured beam measurement results are reported to a network device. Furthermore, a network device of a source cell is supported to determine whether the terminal performs the cell handover according to sufficient measurement results, thereby improving the accuracy of cell handover and improving the communication stability of a terminal.

In some embodiments, the apparatus 200 further includes a receiving module 203 configured to receive second information, in which the second information is used to configure M beams corresponding to each of the at least one first cell included in the first information, and M is a positive integer.

In the present disclosure, the network device configures a numerical count of beams corresponding to each cell reported by the terminal, and a network device of a source cell is supported to determine whether the terminal performs a cell handover according to sufficient measurement results, thereby improving the accuracy of cell handover and improving the communication stability of the terminal.

In some embodiments, the at least one first cell included in the first information is L first cells, L is determined according to a configuration of a network device, and L is a positive integer and less than or equal to N; and the at least one first cell included in the first information is determined by at least one of: determining the L first cells according to a first result of each of the N first cells, in which the first result of the first cell is determined according to a measurement result corresponding to each beam in the first cell; determining the L first cells according to a second result of each of the N first cells, in which the second result of the first cell is determined according to measurement results corresponding to M beams in the first cell, and the measurement results corresponding to the M beams satisfy a first measurement result condition; determining the L first cells according to a third result of each of the N first cells, in which the third result of the first cell is determined according to a measurement result of the first cell that satisfies a second measurement condition; or determining the L first cells according to a fourth result of each of the N first cells, in which the fourth result of the first cell is obtained by filtering a measurement result corresponding to at least one beam in the first cell.

The present disclosure provides various ways to determine the first cell in the first information, thereby reporting some or all of the measured beam measurement results to the network device as needed. Furthermore, the network device of the source cell is supported to determine whether the terminal performs the cell handover according to sufficient measurement results, thereby improving the accuracy of the cell handover and ensuring the communication stability of the terminal after handover.

In some embodiments, the at least one first cell included in the first information includes at least a source cell; and determining the L first cells includes: determining L-1 first cells.

In the preset disclosure, the first information may at least include the beam measurement result of the source cell, such that the network device of the source cell may compare the measurement result of the source cell with a measurement result of a candidate cell in real time, thereby determining whether the terminal performs the cell handover, and improving the accuracy and reliability of cell handover.

In some embodiments, the at least one first cell included in the first information is A first cells, A is determined according to the terminal, and A is a positive integer and less than or equal to N; and the method further includes: sending third information, in which the third information is used to configure a reporting condition, and the reporting condition is a condition related to a measurement threshold, or the reporting condition is a condition related to a measurement threshold and an offset value; and the at least one first cell included in the first information is determined by at least one of: determining the A first cells according to a first result of each of the N first cells and the measurement threshold, in which the first result of the first cell is determined according to a measurement result corresponding to each beam in the first cell; determining the A first cells according to a first result of each of the N first cells, the measurement threshold, and the offset value; determining the A first cells according to a second result of each of the N first cells and the measurement threshold, in which the second result of the first cell is determined according to measurement results corresponding to M beams in the first cell, and the measurement results corresponding to the M beams satisfy a first measurement result condition; determining the A first cells according to a second result of each of the N first cells, the measurement threshold, and the offset value; determining the A first cells according to a fourth result of each of the N first cells and the measurement threshold, in which the fourth result of the first cell is obtained by filtering a measurement result corresponding to at least one beam in the first cell; or determining the A first cells according to a fourth result of each of the N first cells, the measurement threshold, and the offset value.

The present disclosure provides various ways to determine the first cell in the first information, such that a network device of a source cell can reduce the overhead of reporting while determining whether the terminal performs the cell handover according to sufficient measurement results.

In some embodiments, the receiving module 203 is further configured to receive third information, in which the third information is used to configure a reporting condition, and the reporting condition is a condition related to the measurement threshold, or the reporting condition is a condition related to the measurement threshold and the offset value.

The present disclosure may configure corresponding parameters, such that the terminal may determine a numerical count of first cells in the first information. A network device of a source cell determines whether the terminal performs a cell handover according to a measured candidate cell, thereby reducing unnecessary reporting and reducing the overhead of reporting.

In some embodiments, the receiving module 203 is further configured to receive fourth information, in which the fourth information indicates a maximum value X of a numerical count of first cells in the first information, and X is a positive integer; and the at least one first cell included in the first information is X first cells in a case where A is greater than X, and the X first cells are determined according to the A first cells.

The present disclosure can set the maximum numerical count of first cells in the first information, thereby avoiding reporting too much beam measurement results of the cells, reducing consumption of communication resources, and improving the efficiency of cell handover.

In some embodiments, the at least one first cell included in the first information includes at least a source cell; and determining the A first cells includes: determining A-1 first cells.

In the present disclosure, the first information may include at least the beam measurement result of the source cell, such that a network device of a source cell may compare a measurement result of the source cell and a measurement result of a candidate cell in real time, thereby determining whether the terminal performs the cell handover, and improving the accuracy and reliability of cell handover.

In some embodiments, the first information includes one measurement result and at least one difference value; the first information includes, for each of the L first cells, for each of the A first cells, or for each of the X first cells, one measurement result and at least one difference value; or the first information sequentially includes, for each of the L first cells, for each of the A first cells, or for each of the X first cells, the measurement result corresponding to at least one beam in the cell in a descending order or an ascending order of the measurement result.

The present disclosure provides various forms of the first information, such that the network device of the source cell determines whether the terminal performs the cell handover according to sufficient measurement results, thereby improving the accuracy and reliability of cell handover.

In some embodiments, the first information includes a specific bit, and the specific bit indicates a numerical count of first cells in the first information.

In the present disclosure, the first information can also indicate the numerical count of first cells included, and report some or all of the beam measurement results measured to the network device. Furthermore, a network device of a source cell is supported to determine whether the terminal performs the cell handover according to sufficient measurement results, thereby improving the accuracy and stability of cell handover.

In some embodiments, the receiving module 203 is further configured to receive fifth information, in which the fifth information is used to configure a reference signal parameter and a reporting resource, a reference signal corresponding to the reference signal parameter is used to perform the beam measurement, and the reporting resource is a time domain/frequency domain resource used for sending the first information.

In the present disclosure, the information for instructing the terminal to perform the beam measurement reporting may be received, thereby sending the first information according to the information. Furthermore, the network device of the source cell is supported to determine whether the terminal performs the cell handover according to sufficient measurement results, thereby improving the accuracy of the cell handover and improving the communication stability of the terminal.

FIG. 16 is a block diagram illustrating an apparatus for reporting a beam measurement result according to an illustrative embodiment. Referring to FIG. 16, the apparatus 300 includes a receiving module 301, configured to receive first information, in which the first information includes a beam measurement result corresponding to at least one of N first cells, N is a positive integer greater than 1, and the N first cells include at least one candidate cell.

In the present disclosure, the beam measurement is performed on at least one candidate cell, and some or all of the measured beam measurement results are reported to a network device. Furthermore, a network device of a source cell is supported to determine whether a terminal performs the cell handover according to sufficient measurement results, thereby improving the accuracy of cell handover and improving the communication stability of a terminal.

In some embodiments, the apparatus 300 further includes a sending module 302 configured to send second information, in which the second information is used to configure M beams corresponding to each of the at least one first cell included in the first information, and M is a positive integer.

In the present disclosure, the network device configures a numerical count of beams corresponding to each cell reported by the terminal, and a network device of a source cell is supported to determine whether the terminal performs a cell handover according to sufficient measurement results, thereby improving the accuracy of cell handover and improving the communication stability of the terminal.

In some embodiments, the at least one first cell included in the first information is L first cells, L is determined according to a configuration of a network device, and L is a positive integer and less than or equal to N; and the at least one first cell included in the first information is determined by at least one of: determining the L first cells according to a first result of each of the N first cells, in which the first result of the first cell is determined according to a measurement result corresponding to each beam in the first cell; determining the L first cells according to a second result of each of the N first cells, in which the second result of the first cell is determined according to measurement results corresponding to M beams in the first cell, and the measurement results corresponding to the M beams satisfy a first measurement result condition; determining the L first cells according to a third result of each of the N first cells, in which the third result of the first cell is determined according to a measurement result of the first cell that satisfies a second measurement condition; or determining the L first cells according to a fourth result of each of the N first cells, in which the fourth result of the first cell is obtained by filtering a measurement result corresponding to at least one beam in the first cell.

The present disclosure provides various ways to determine the first cell in the first information, thereby reporting some or all of the measured beam measurement results to the network device as needed. Furthermore, the network device of the source cell is supported to determine whether the terminal performs the cell handover according to sufficient measurement results, thereby improving the accuracy of the cell handover and ensuring the communication stability of the terminal after handover.

In some embodiments, the at least one first cell included in the first information includes at least a source cell; and determining the L first cells includes: determining L-1 first cells.

In the preset disclosure, the first information may at least include the beam measurement result of the source cell, such that the network device of the source cell may compare the measurement result of the source cell with a measurement result of a candidate cell in real time, thereby determining whether the terminal performs the cell handover, and improving the accuracy and reliability of cell handover.

In some embodiments, the at least one first cell included in the first information is A first cells, A is determined according to the terminal, and A is a positive integer and less than or equal to N; and the sending module 302 is further configured to send third information, in which the third information is used to configure a reporting condition, and the reporting condition is a condition related to a measurement threshold, or the reporting condition is a condition related to a measurement threshold and an offset value; and the at least one first cell included in the first information is determined by at least one of: determining the A first cells according to a first result of each of the N first cells and the measurement threshold, in which the first result of the first cell is determined according to a measurement result corresponding to each beam in the first cell; determining the A first cells according to a first result of each of the N first cells, the measurement threshold, and the offset value; determining the A first cells according to a second result of each of the N first cells and the measurement threshold, in which the second result of the first cell is determined according to measurement results corresponding to M beams in the first cell, and the measurement results corresponding to the M beams satisfy a first measurement result condition; determining the A first cells according to a second result of each of the N first cells, the measurement threshold, and the offset value; determining the A first cells according to a fourth result of each of the N first cells and the measurement threshold, in which the fourth result of the first cell is obtained by filtering a measurement result corresponding to at least one beam in the first cell; or determining the A first cells according to a fourth result of each of the N first cells, the measurement threshold, and the offset value.

The present disclosure provides various ways to determine the first cell in the first information, such that a network device of a source cell can reduce the overhead of reporting while determining whether the terminal performs the cell handover according to sufficient measurement results.

In some embodiments, the sending module 302 is further configured to send fourth information, in which the fourth information indicates a maximum value X of a numerical count of first cells in the first information, and X is a positive integer; and the at least one first cell included in the first information is X first cells in a case where A is greater than X, and the X first cells are determined according to the A first cells.

The present disclosure can set the maximum numerical count of first cells in the first information, thereby avoiding reporting too much beam measurement results of the cells, reducing consumption of communication resources, and improving the efficiency of cell handover.

In some embodiments, the at least one first cell included in the first information includes at least a source cell; and determining the A first cells includes: determining A-1 first cells.

In the present disclosure, the first information may include at least the beam measurement result of the source cell, such that a network device of a source cell can compare a measurement result of the source cell and a measurement result of a candidate cell in real time, thereby determining whether the terminal performs the cell handover, and improving the accuracy and reliability of cell handover.

In some embodiments, the first information includes one measurement result and at least one difference value; the first information includes, for each of the L first cells, for each of the A first cells, or for each of the X first cells, one measurement result and at least one difference value; or the first information sequentially includes, for each of the L first cells, for each of the A first cells, or for each of the X first cells, the measurement result corresponding to at least one beam in the cell in a descending order or an ascending order of the measurement result.

The present disclosure provides various forms of the first information, such that the network device of the source cell determines whether the terminal performs the cell handover according to sufficient measurement results, thereby improving the accuracy and reliability of cell handover.

In some embodiments, the first information includes a specific bit, and the specific bit indicates a numerical count of first cells in the first information.

In the present disclosure, the first information can also indicate the numerical count of first cells included, and report some or all of the beam measurement results measured to the network device. Furthermore, the network device of the source cell is supported to determine whether the terminal performs the cell handover according to sufficient measurement results, thereby improving the accuracy and stability of cell handover.

In some embodiments, the sending module 302 is further configured to send fifth information, in which the fifth information is used to configure a reference signal parameter and a reporting resource, a reference signal corresponding to the reference signal parameter is used to perform the beam measurement, and the reporting resource is a time domain resource and/or a frequency domain resource used for sending the first information.

In the present disclosure, the information for instructing the terminal to perform the beam measurement reporting may be received, thereby sending the first information according to the information. Furthermore, the network device of the source cell determines whether the terminal performs the cell handover according to sufficient measurement results, thereby improving the accuracy and stability of cell handover.

It may be understood that the apparatus 300 may also include any possible modules such as a processing module, which is not limited in the present disclosure.

With respect to the apparatuses in the above embodiments, the specific manners for performing operations for individual modules therein have been described in detail in the embodiments regarding the method, which will not be elaborated herein.

FIG. 17 is a block diagram illustrating a device for reporting a beam measurement result according to an illustrative embodiment. For example, the device 400 may be a mobile phone, a computer, a digital broadcast terminal, a messaging device, a game console, a tablet device, a medical device, a fitness device, a personal digital assistant, or the like.

Referring to FIG. 17, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, phone calls, data communications, camera operations, and recording operations. The processing component 402 may include one or more processors 420 to execute instructions to perform all or some of the steps in the above-described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, videos, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and/or the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as keyboards, click wheels, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may further include a light sensor, such as a CMOS or CCD image sensor, for use in imaging applications. In some embodiments, the sensor component 414 may further include an accelerometer sensor, a gyroscope sensor, a magnetic sensor, a pressure sensor, or a temperature sensor.

The communication component 416 is configured to facilitate communication, wired or wireless, between the device 400 and other devices. The device 400 may access a wireless network based on a communication standard, such as Wi-Fi, 2G, or 3G, or a combination thereof. In an illustrative embodiment, the communication component 416 receives a broadcast signal or broadcast associated information from an external broadcast management system via a broadcast channel. In an illustrative embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer-readable storage medium including instructions, such as included in the memory 404, executable by the processor 420 in the device 400, for completing the above-mentioned methods. For example, the non-transitory computer-readable storage medium may be a ROM, a random access memory (RAM), a CD-ROM, a magnetic tape, a floppy disc, an optical data storage device, and the like.

FIG. 18 is a block diagram illustrating another device for reporting a beam measurement result according to an illustrative embodiment. For example, the device 500 may be provided as a base station or a server. Referring to FIG. 18, the device 500 includes a processing component 522 and a memory resource represented by a memory 532. The processing component 522 may further include one or more processors. The memory 532 is configured to store instructions executable by the processing component 522, such as an application program. The application program stored in the memory 532 may include one or more modules each corresponding to a set of instructions. In addition, the processing component 522 is configured to execute the instructions to perform the above methods.

The device 500 further includes a power component 526 configured to perform power management on the device 500, a wired or wireless network interface 550 configured to connect the device 500 to the network, and an input/output (I/O) interface 558. The device 500 may operate an operating system stored in the memory 532, such as Windows Server^{™}, Mac OS X^{™}, Unix^{™}, Linux^{™}, FreeBSD^{™}, or the like.

In the present disclosure, the beam measurement is performed on at least one candidate cell, and some or all of the measured beam measurement results are reported to the network device. Furthermore, the network device of the source cell is supported to determine whether the terminal performs the cell handover according to sufficient measurement results, thereby improving the accuracy and reliability of cell handover.

It is further understood that "a plurality" in this disclosure refers to two or more, and other quantifiers are similar thereto. The word "and/or" describes an associated relationship of associated objects, means that there may be three relationships, for example, A and/or B, which may mean that A exists alone, A and B exist at the same time, and B exists alone. A character "/" generally indicates that contextual objects are in an "or" relationship. Singular forms "a", "an" and "the" are intended to include plural forms, unless clearly indicated in the context otherwise.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, second information may also be referred to as first information, without departing from the scope of embodiments of the present disclosure.

It is further understood that the meaning of terms such as "in response to", "if", and the like involved in the present disclosure will depend on the context and the actual use scenario. As used herein, the term "in response to" may be construed to mean "when" or "upon" or "if" or "in a case where" depending on the context.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art.

It is to be understood that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for reporting a beam measurement result, performed by a terminal, comprising:
performing beam measurement on N first cells to obtain beam measurement results corresponding to the N first cells, wherein N is a positive integer greater than 1, and the N first cells comprise at least one candidate cell; and
sending first information, wherein the first information comprises a beam measurement result corresponding to at least one of the N first cells.

2. The method of claim 1, further comprising:
receiving second information, wherein the second information is used to configure M beams corresponding to each of the at least one first cell comprised in the first information, and M is a positive integer.

3. The method of claim 2, wherein the at least one first cell comprised in the first information is L first cells, L is determined according to a configuration of a network device, and L is a positive integer and less than or equal to N; and
the at least one first cell comprised in the first information is determined by at least one of:
determining the L first cells according to a first result of each of the N first cells, wherein the first result of the first cell is determined according to a measurement result corresponding to each beam in the first cell;
determining the L first cells according to a second result of each of the N first cells, wherein the second result of the first cell is determined according to measurement results corresponding to M beams in the first cell, and the measurement results corresponding to the M beams satisfy a first measurement result condition;
determining the L first cells according to a third result of each of the N first cells, wherein the third result of the first cell is determined according to a measurement result of the first cell that satisfies a second measurement condition; or
determining the L first cells according to a fourth result of each of the N first cells, wherein the fourth result of the first cell is obtained by filtering a measurement result corresponding to at least one beam in the first cell.

4. The method of claim 3, wherein the at least one first cell comprised in the first information comprises at least a source cell; and
determining the L first cells comprises:
determining L-1 first cells.

5. The method of claim 2, wherein the at least one first cell comprised in the first information is A first cells, A is determined according to the terminal, and A is a positive integer and less than or equal to N; and the method further comprises:
determining a measurement threshold, or determining a measurement threshold and an offset value; and
the at least one first cell comprised in the first information is determined by at least one of:
determining the A first cells according to a first result of each of the N first cells and the measurement threshold, wherein the first result of the first cell is determined according to a measurement result corresponding to each beam in the first cell;
determining the A first cells according to a first result of each of the N first cells, the measurement threshold, and the offset value;
determining the A first cells according to a second result of each of the N first cells and the measurement threshold, wherein the second result of the first cell is determined according to measurement results corresponding to M beams in the first cell, and the measurement results corresponding to the M beams satisfy a first measurement result condition;
determining the A first cells according to a second result of each of the N first cells, the measurement threshold, and the offset value;
determining the A first cells according to a fourth result of each of the N first cells and the measurement threshold, wherein the fourth result of the first cell is obtained by filtering a measurement result corresponding to at least one beam in the first cell; or
determining the A first cells according to a fourth result of each of the N first cells, the measurement threshold, and the offset value.

6. The method of claim 5, wherein determining the measurement threshold comprises:
receiving third information, wherein the third information is used to configure a reporting condition, and the reporting condition is a condition related to the measurement threshold, or the reporting condition is a condition related to the measurement threshold and the offset value.

7. The method of claim 5 or 6, further comprising:
receiving fourth information, wherein the fourth information indicates a maximum value X of a numerical count of first cells in the first information, and X is a positive integer; and the at least one first cell comprised in the first information is X first cells in a case where A is greater than X, and the X first cells are determined according to the A first cells.

8. The method of claim 5 or 6, wherein the at least one first cell comprised in the first information comprises at least a source cell; and
determining the A first cells comprises:
determining A-1 first cells.

9. The method of claim 3 or 5, wherein:
the first information comprises one measurement result and at least one difference value;
the first information comprises, for each of the L first cells, for each of the A first cells, or for each of X first cells, one measurement result and at least one difference value; or
the first information sequentially comprises, for each of the L first cells, for each of the A first cells, or for each of X first cells, the measurement result corresponding to at least one beam in the cell in a descending order or an ascending order of the measurement result.

10. The method of claim 5, wherein the first information comprises a specific bit, and the specific bit indicates a numerical count of first cells in the first information.

11. The method of claim 1, further comprising:
receiving fifth information, wherein the fifth information is used to configure a reference signal parameter and a reporting resource, a reference signal corresponding to the reference signal parameter is used to perform the beam measurement, and the reporting resource is a time domain resource and/or a frequency domain resource used for sending the first information.

12. A method for reporting a beam measurement result, performed by a network device, comprising:
receiving first information, wherein the first information comprises a beam measurement result corresponding to at least one of N first cells, N is a positive integer greater than 1, and the N first cells comprise at least one candidate cell.

13. The method of claim 12, further comprising:
sending second information, wherein the second information is used to configure M beams corresponding to each of the at least one first cell comprised in the first information, and M is a positive integer.

14. The method of claim13, wherein the at least one first cell comprised in the first information is L first cells, L is determined according to a configuration of a network device, and L is a positive integer and less than or equal to N; and
the at least one first cell comprised in the first information is determined by at least one of:
determining the L first cells according to a first result of each of the N first cells, wherein the first result of the first cell is determined according to a measurement result corresponding to each beam in the first cell;
determining the L first cells according to a second result of each of the N first cells, wherein the second result of the first cell is determined according to measurement results corresponding to M beams in the first cell, and the measurement results corresponding to the M beams satisfy a first measurement result condition;
determining the L first cells according to a third result of each of the N first cells, wherein the third result of the first cell is determined according to a measurement result of the first cell that satisfies a second measurement condition; or
determining the L first cells according to a fourth result of each of the N first cells, wherein the fourth result of the first cell is obtained by filtering a measurement result corresponding to at least one beam in the first cell.

15. The method of claim 14, wherein the at least one first cell comprised in the first information comprises at least a source cell; and
determining the L first cells comprises:
determining L-1 first cells.

16. The method of claim 13, wherein the at least one first cell comprised in the first information is A first cells, A is determined according to the terminal, and A is a positive integer and less than or equal to N; and the method further comprises:
sending third information, wherein the third information is used to configure a reporting condition, and the reporting condition is a condition related to a measurement threshold, or the reporting condition is a condition related to a measurement threshold and an offset value; and
the at least one first cell comprised in the first information is determined by at least one of:
determining the A first cells according to a first result of each of the N first cells and the measurement threshold, wherein the first result of the first cell is determined according to a measurement result corresponding to each beam in the first cell;
determining the A first cells according to a first result of each of the N first cells, the measurement threshold, and the offset value;
determining the A first cells according to a second result of each of the N first cells and the measurement threshold, wherein the second result of the first cell is determined according to measurement results corresponding to M beams in the first cell, and the measurement results corresponding to the M beams satisfy a first measurement result condition;
determining the A first cells according to a second result of each of the N first cells, the measurement threshold, and the offset value;
determining the A first cells according to a fourth result of each of the N first cells and the measurement threshold, wherein the fourth result of the first cell is obtained by filtering a measurement result corresponding to at least one beam in the first cell; or
determining the A first cells according to a fourth result of each of the N first cells, the measurement threshold, and the offset value.

17. The method of claim 16, further comprising:
sending fourth information, wherein the fourth information indicates a maximum value X of a numerical count of first cells in the first information, and X is a positive integer; and the at least one first cell comprised in the first information is X first cells in a case where A is greater than X, and the X first cells are determined according to the A first cells.

18. The method of claim 16, wherein the at least one of the first cells comprised in the first information comprises at least a source cell; and
determining the A first cells comprises:
determining A-1 first cells.

19. The method of claim 14 or 16, wherein:
the first information comprises one measurement result and at least one difference value;
the first information comprises, for each of the L first cells, for each of the A first cells, or for each of X first cells, one measurement result and at least one difference value; or
the first information sequentially comprises, for each of the L first cells, for each of the A first cells, or for each of X first cells, the measurement result corresponding to at least one beam in the cell in a descending order or an ascending order of the measurement result.

20. The method of claim 16, wherein the first information comprises a specific bit, and the specific bit indicates a numerical count of first cells in the first information.

21. The method of claim 12, further comprising:
sending fifth information, wherein the fifth information is used to configure a reference signal parameter and a reporting resource, a reference signal corresponding to the reference signal parameter is used to perform the beam measurement, and the reporting resource is a time domain resource and/or a frequency domain resource used for sending the first information.

22. An apparatus for reporting a beam measurement result, comprising:
a processing module, configured to perform beam measurement on N first cells to obtain beam measurement results corresponding to the N first cells, wherein N is a positive integer greater than 1, and the N first cells comprises at least one candidate cell; and
a sending module, configured to send first information, wherein the first information comprises a beam measurement result corresponding to at least one of the N first cells.

23. An apparatus for reporting a beam measurement result, comprising:
a receiving module, configured to receive first information, wherein the first information comprises a beam measurement result corresponding to at least one of N first cells, N is a positive integer greater than 1, and the N first cells comprise at least one candidate cell.

24. A communication device, comprising:
a processor; and
a memory for storing processor-executable instructions;
wherein the processor is configured to perform the method of any one of claims 1 to 11.

25. A communication device, comprising:
a processor; and
a memory for storing processor-executable instructions;
wherein the processor is configured to perform the method of any one of claims 12 to 21.

26. A non-transitory computer-readable storage medium having stored therein instructions that, when executed by a processor of a terminal, enable the terminal to perform the method of any one of claims 1 to 11.

27. A non-transitory computer-readable storage medium having stored therein instructions that, when executed by a processor of a network device, enable the network device to perform the method of any one of claims 12 to 21.
